# EUROPÄISCHE PATENTANMELDUNG

(11) **EP 4 249 429 A1**
(43) Veröffentlichungstag der Anmeldung: **27.09.2023**
(21) Anmeldenummer: 22020126.3
(22) Anmeldetag: 24.03.2022
(51) Int. Cl.: C01B 3/34, B01D 53/047, B01J 8/06, B01J 19/08, C01B 3/38

(54) **VERFAHREN UND ANLAGE ZUR HERSTELLUNG EINES ZIELPRODUKTS UMFASSEND EINE DAMPFREFORMIERUNG**

(71) Anmelder: Linde GmbH, 82049 Pullach (DE)
(72) Erfinder: Schödel, Nicole, 82049 Pullach (DE); Schwarzhuber, Josef, 82049 Pullach (DE); Peschel, Andreas, 82049 Pullach (DE)
(74) Vertreter: Fischer, Werner

(57) **Zusammenfassung**

Verfahren (100, 200, 300, 400) zur Herstellung eines Zielprodukts, bei dem durch Dampfreformierung ein Wasserstoff enthaltendes Gasgemisch gebildet wird, das einer Aufbereitung (20) oder Umsetzung (40) zu dem Zielprodukt unterworfen wird, wobei eine Reaktoranordnung (10) mit einem ersten Reformierreaktor (11, 12) und einem zweiten Reformierreaktor (11, 12) verwendet wird, wobei der erste Reformierreaktor (11) überwiegend oder ausschließlich elektrisch beheizt wird und der zweite Reformierreaktor (12) überwiegend oder ausschließlich durch Verbrennung eines Brennstoffs beheizt wird oder umgekehrt, dadurch gekennzeichnet, dass dem zweiten Reformierreaktor (12) zumindest ein Teil eines Produktstroms des ersten Reformierreaktors (11) und dem ersten Reformierreaktor (11) ein einen Kohlenwasserstoff enthaltender Frischeinsatz zugeführt wird oder dass dem ersten und dem zweiten Reformierreaktor (11, 12) der Frischeinsatz jeweils in Teilen zugeführt wird. Eine entsprechende Anlage ist ebenfalls Gegenstand der Erfindung.

## Beschreibung

Die Erfindung betrifft ein Verfahren und eine Anlage zur Herstellung eines Zielprodukts, bei dem durch Dampfreformierung ein Wasserstoff enthaltendes Gasgemisch gebildet wird, das einer Aufbereitung oder Umsetzung zu dem Zielprodukt unterworfen wird.

### Hintergrund

Die Erzeugung von Synthesegas bzw. Wasserstoff erfolgt derzeit noch überwiegend auf Basis von Kohlenwasserstoffen, beispielsweise durch Dampfreformierung von Erdgas (Steam Methane Reforming, SMR). Da derartige Verfahren einen beträchtlichen Kohlendioxid-Fußabdruck aufweisen, wird der entsprechend bereitgestellte Wasserstoff auch als "grauer" Wasserstoff bezeichnet.

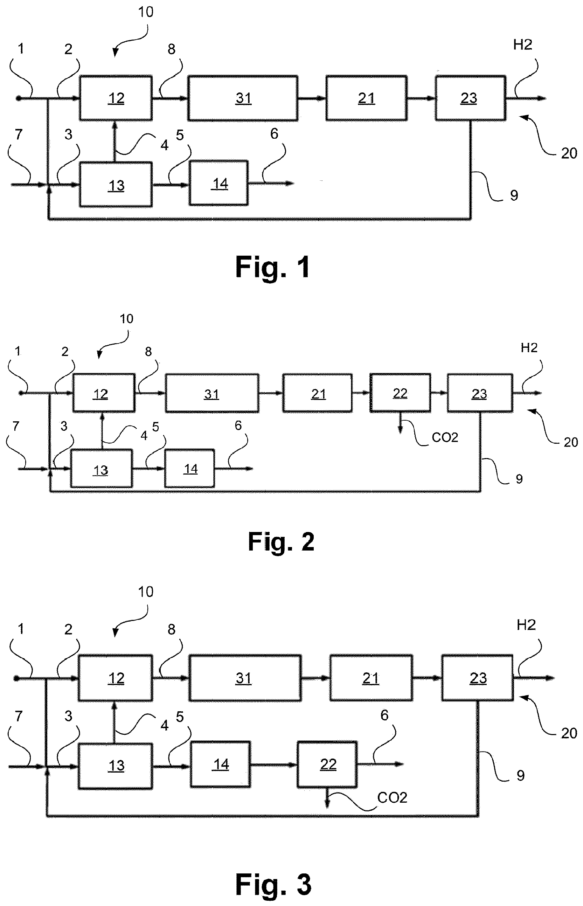

Ein entsprechendes Verfahren ist in der beigefügten Figur 1 veranschaulicht, auf die an dieser Stelle vorab Bezug genommen werden soll. Das Verfahren umfasst die Verwendung einer Reaktoranordnung 10, die im dargestellten Beispiel einen Reformierreaktor 12 aufweist, der überwiegend oder ausschließlich durch eine Verbrennung eines Brennstoffs bzw. Brenngases in einer Brenneranordnung 13 beheizt wird. Der Begriff "überwiegend" soll hier eine Bereitstellung von mindestens 90, 95 oder 99% in der jeweils genannten Weise bezeichnen.

In dem Verfahren gemäß Figur 1 wird im dargestellten Beispiel ein Erdgasstrom 1 bereitgestellt, der in Anteilen 2 und 3 in dem Reformierreaktor 12 als Einsatz verwendet und in der Brenneranordnung 13 verfeuert wird. Anstelle eines Erdgasstroms 1 kann beispielsweise ein Biogasstrom verwendet werden. Allgemein kann hier beispielsweise eine Mischung aus Methan, Kohlendioxid und anderen Gasen, aber auch beispielsweise Naphtha, verwendet werden. Es handelt sich also, wie auch unten angegeben, um einen einen Kohlenwasserstoff enthaltenen Feed zur Reformierung zu Synthesegas. Weitere, optional vorhandene Komponenten wie beispielsweise ein bekannter Pre-Reformer sind hier nicht explizit gezeigt. Durch die Brenneranordnung 13 bereitgestellte Wärme ist mit 4 bezeichnet, ein Abgasstrom mit 5. Der Abgasstrom 5 wird einer Wärmerückgewinnung 14 zugeführt, aus der ein Kohlendioxid enthaltender Strom 6 ausgeführt werden kann. Der Brenneranordnung 13 wird außerdem Verbrennungsluft 7 zugeführt. Dem Reformierreaktor 12 zugeführter Dampf ist nicht gesondert veranschaulicht.

Der Reaktoranordnung 10 bzw. dem Reformierreaktor 12 wird ein Rohprodukt 8 entnommen und nach einer Wärmeintegration und Konditionierung 31 einer Aufbereitung 20 zugeführt. Die Aufbereitung 20 umfasst hier eine Wassergasshift 21 und eine Überführung 23, z.B. unter Einsatz einer Druckwechseladsorption (PSA), zumindest eines Teils der in dem Produktgemisch enthaltenen Kohlenwasserstoffe in einen Restgasstrom 9, wobei ein Wasserstoffstrom H2 verbleibt. Der Wasserstoffstrom H2 kann unterschiedliche Qualitäten aufweisen (wie Druck, Zusammensetzung, z.B. 99 mol-%, 99,9 mol-%, 99,99 mol-% oder auch 99,999 mol-% Wasserstoffgehalt). Der Restgasstrom 9 enthält insbesondere nicht umgesetzte Kohlenwasserstoffe aber auch Wasserstoff und Kohlendioxid. Er kann insbesondere thermisch genutzt und in der Brenneranordnung 13 verbrannt werden, um den Reformierreaktor 12 zu beheizen.

Im Zuge der Klimadiskussion und entsprechender regulatorischer Maßnahmen bekommen Maßnahmen zur Vermeidung und Rückgewinnung von Kohlendioxid zunehmend an Bedeutung. Eine langfristig angestrebte Lösung kann beispielsweise die Gewinnung von Wasserstoff mittels Elektrolyse umfassen, die bei Einsatz von erneuerbaren Energiequellen kohlendioxidneutral sein kann, so dass entsprechend hergestellter Wasserstoff auch als "grün" bezeichnet wird.

Zumindest bis zur wirtschaftlich erfolgreichen Realisierung von Verfahren zur Herstellung von "grünem" Wasserstoff können Brückentechnologien eingesetzt werden. Diese umfassen insbesondere die Rückgewinnung und Lagerung oder Verwendung von Kohlendioxid (engl. Carbon (Dioxide) Capture and Storage, CCS bzw. Carbon (Dioxide) Capture and Utilization, CCU). In diesem Fall wird häufig auch von "blauem" Wasserstoff gesprochen.

Die Figuren 2 und 3 zeigen dabei zwei mögliche Alternativen der Kohlendioxidabtrennung, die jeweils mit 22 bezeichnet sind, und zwar im Prozessgasstrom 8 bzw. im kohlendioxidhaltigen Strom 6. Die Kohlendioxidabtrennung kann jeweils in fachüblicher Weise ausgeführt sein, beispielsweise umfassend eine Aminwäsche, eine Kondensation, ein Membranverfahren und eine Adsorption. Entsprechende Verfahren können in Ausgestaltungen der vorliegenden Erfindung verwendet werden. Eine Rückführung von Niederdruckströmen aus dieser Abtrennung mit geringem Kohlendioxidanteil zum Brenner einer befeuerten Dampfreformierung ist, auch in Ausgestaltungen der Erfindung möglich. Die Kohlendioxidabtrennung 22 im Prozessgasstrom 8, wie in Figur 2 veranschaulicht, kann insbesondere zur Abtrennung eines kohlendioxidreichen Stoffstroms CO2 verwendet werden, wobei der Restgasstrom 9 mit geringerem Kohlendioxidgehalt bereitgestellt werden kann. Die Kohlendioxidabtrennung 22 im kohlendioxidhaltigen Strom 5, die in Figur 3 stromab der Wärmerückgewinnung 14 veranschaulicht ist, kann insbesondere zur Bereitstellung eines an Kohlendioxid abgereicherten Stoffstroms 6 und eines kohlendioxidreichen Stoffstroms CO2 verwendet werden.

Die vorliegende Erfindung ist nicht auf die Herstellung von Wasserstoff als Zielprodukt beschränkt, sondern kann auch die Herstellung von Synthesegas und dessen Umsetzung zu dem eigentlichen Zielprodukt umfassen, wie unten erläutert.

In entsprechenden Verfahren wird weiterhin eine beträchtliche Menge von Kohlendioxid durch die Verbrennung fossiler Brennstoffe gebildet. Die Erfindung stellt sich die Aufgabe, hier Verbesserungen bereitzustellen.

### Offenbarung der Erfindung

Diese Aufgabe wird durch ein Verfahren und eine Anlage zur Herstellung eines Zielprodukts, bei dem durch Dampfreformierung ein Wasserstoff enthaltendes Gasgemisch gebildet wird, das einer Aufbereitung oder Umsetzung zu dem Zielprodukt unterworfen wird, mit den Merkmalen der unabhängigen Patentansprüche gelöst. Ausgestaltungen sind Gegenstand der abhängigen Patentansprüche sowie der nachfolgenden Beschreibung.

Die Lösung der vorliegenden Erfindung umfasst die Verwendung einer elektrifizierten Dampfreformierung, bei der die aufzubringende Wärme überwiegend oder ausschließlich durch elektrischen Strom bereitgestellt wird.

Herkömmlicherweise wird Kohlendioxid in der Dampfreformierung zu beträchtlichen Anteilen auch durch die Verbrennung des Brenngases zur Beheizung der Dampfreformierung erzeugt. Diese zusätzliche Kohlendioxidquelle (zusätzlich zu Kohlendioxid im Prozessgasstrom) führt zu einer aufwendigen Kohlendioxidrückgewinnung. Eine (rein) elektrisch beheizte Dampfreformierung vermeidet dies. Eine elektrisch beheizte Dampfreformierung kann außerdem zu einer Erhöhung der Wasserstoffausbeute führen, da Wasserstoff nicht teilweise zur Befeuerung verbrannt wird.

Kritisch bei einer rein elektrischen Beheizung in der Dampfreformierung ist jedoch, dass keine Senke für das bei der Abtrennung von Wasserstoff, beispielsweise mittels Druckwechseladsorption, verbleibende Restgas existiert, das in den eingangs diskutierten Beispielen als Rückführstrom in die Brenneranordnung zurückgeführt wird. Entsprechendes gilt auch, wenn mittels der Dampfreformierung ein Synthesegas erzeugt und dieses zu dem eigentlichen Zielprodukt umgesetzt wird. In diesem Fall fällt ein vergleichbares Restgas in einer Produktaufbereitung stromab der Umsetzung an. Mit dem Begriff Synthesegas wird hier ein Gasgemisch bezeichnet, dass überwiegend, d.h. zu mehr als 50, 60 oder 75%, die Komponenten Wasserstoff und Kohlenmonoxid enthält, aber auch Kohlendioxid enthalten kann. Je nach Bedarf kann durch eine Wassergasshift oder reverse Wassergasshift der Gehalt von Kohlenmonoxid zugunsten von Wasserstoff (und Kohlendioxid) verschoben werden oder umgekehrt.

Wie im Rahmen der vorliegenden Erfindung erkannt wurde, ist daher die Kombination aus elektrischer und brennstoffbasierter Beheizung der Dampfreformierung besonders vorteilhaft. Die vorliegende Erfindung schlägt daher entsprechende Verfahren und Anlagen vor, die insbesondere die Nutzung des erwähnten Restgases erlauben. Wie auch nachfolgend erläutert, können dabei elektrisch und mittels Brenngas beheizte Reformierreaktoren seriell hintereinander oder parallel zueinander angeordnet werden. Die parallele Anordnung ist dabei besonders vorteilhaft für die Nachrüstung bestehender Anlagen, oder wenn die elektrisch beheizte Dampfreformierung nur temporär, beispielsweise zu Zeiten hohen Stromangebots, durchgeführt wird, oder generell zur Erhöhung der Verfügbarkeit einer entsprechenden Anlage.

Eine serielle Anordnung kann die Anordnung der elektrisch beheizten Dampfreformierung stromauf oder stromab einer konventionell befeuerten Dampfreformierung umfassen. Eine Anordnung der elektrisch beheizten Dampfreformierung stromauf der konventionell befeuerten Dampfreformierung hat den besonderen Vorteil, dass die elektrisch beheizte Dampfreformierung bei geringeren Temperaturen durchgeführt werden kann, wodurch sich die Kosten zur Stromversorgung aufgrund der geringeren erforderlichen Temperaturfestigkeit der verwendeten Materialien reduzieren bzw. die Zuverlässigkeit der Bestromung erhöht. Eine Anordnung der elektrisch beheizten Dampfreformierung stromab einer konventionell befeuerten Dampfreformierung kann dagegen besonders vorteilhaft sein, wenn die elektrisch beheizte Dampfreformierung höhere Temperaturen als die konventionellen Dampfreformierungstemperaturen (typischerweise ca. 950 °C) toleriert und damit ein Schlupf von Methan reduziert werden kann.

Die vorliegende Erfindung schlägt insgesamt ein Verfahren zur Herstellung eines Zielprodukts vor, bei dem durch Dampfreformierung ein Wasserstoff enthaltendes Gasgemisch gebildet wird, das einer Aufbereitung oder Umsetzung zu dem Zielprodukt unterworfen wird. Eine Umsetzung zu dem Zielprodukt schließt dabei eine hierzu vorgenommene Aufbereitung nicht aus. Für die Dampfreformierung wird eine Reaktoranordnung mit einem ersten Reformierreaktor und einem zweiten Reformierreaktor verwendet, wobei der erste Reformierreaktor überwiegend oder ausschließlich elektrisch beheizt wird und der zweite Reformierreaktor überwiegend oder ausschließlich durch Verbrennung eines Brennstoffs beheizt wird oder umgekehrt. Mit anderen Worten kann auch der zweite Reformierreaktor überwiegend oder ausschließlich elektrisch und der erste Reformierreaktor überwiegend oder ausschließlich durch Verbrennung eines Brennstoffs beheizt werden.

Hierbei ist vorgesehen, dass dem zweiten Reformierreaktor zumindest ein Teil eines Produktstroms des ersten Reformierreaktors und dem ersten Reformierreaktor ein einen Kohlenwasserstoff enthaltender Frischeinsatz zugeführt wird (d.h. eine serielle Anordnung vorliegt) oder dass dem ersten und dem zweiten Reformierreaktor der Frischeinsatz jeweils in Teilen zugeführt wird (parallele Anordnung). Die Bezugnahme auf "einen" Kohlenwasserstoff im Singular schließt dabei nicht aus, dass der Frischeinsatz auch weitere Kohlenwasserstoffe enthält.

In einer Ausgestaltung der vorliegenden Erfindung ist vorgesehen, dass der Reaktoranordnung das Gasgemisch entnommen und einer Aufbereitung unterworfen wird, wobei die Aufbereitung eine Überführung von Komponenten des Gasgemischs aus dem Gasgemisch in einen Restgasstrom umfasst. Diese Komponenten können insbesondere einen Teil des eingesetzten Kohlenwasserstoffs umfassen, der durch eine nicht vollständige Umsetzung in der Reaktoranordnung in das Gasgemisch übergeht, beispielsweise Methan (auch als "Schlupf" bezeichnet). Diese Überführung von Komponenten aus dem Gasgemisch, insbesondere von Methan, in den Restgasstrom kann insbesondere eine Druckwechseladsorption umfassen, wie bereits einleitendend unter zu den Ausgestaltungen gemäß Figuren 1 bis 3 erläutert. Die vorliegende Erfindung erlaubt eine besonders vorteilhafte Nutzung des Restgasstroms.

In einer Ausgestaltung der vorliegenden Erfindung ist vorgesehen, dass eine weitere Druckwechseladsorption durchgeführt wird, der zumindest ein Teil des bei der ersten Druckwechseladsorption anfallenden Restgasstroms zugeführt wird. Auch eine Rückführung zumindest eines Teils des Restgasstroms in die erste Druckwechseladsorption kann vorgesehen sein. Auf diese Weise lässt sich in der weiteren Druckwechseladsorption insbesondere weiterer Wasserstoff rückgewinnen.

In allen Möglichkeiten der Rückführung können bei Bedarf ein oder mehrere Verdichter verwendet werden, um den Restgasstrom bzw. Teile hiervon auf den benötigten Druck zu bringen, beispielsweise bei Rückführung in die Reaktoranordnung auf einen Betriebsdruck derselben. Mehrere Verdichter können für die unterschiedlichen Restgasteilströme verwendet werden oder ein Verdichter für mehrere. Beliebige Kombinationen von Verdichtern sind möglich.

In alternativen Ausgestaltungen der vorliegenden Erfindung enthält das gebildete Gasgemisch ferner Kohlenmonoxid und zumindest ein Teil hiervon wird der Umsetzung unterworfen. Die Umsetzung umfasst dabei einen Syntheseschritt und einen Abtrennschritt, wobei der Abtrennschritt eine Überführung von Komponenten aus einem Produktgemisch, das in dem Syntheseschritt erhalten wird, in einen Restgasstrom umfasst. Entsprechende Komponenten können ebenfalls den ursprünglich eingesetzten Kohlenwasserstoff, insbesondere Methan, umfassen, der den Syntheseschritt als sich im Wesentlichen inert verhaltende Komponente durchläuft. Allgemein kann ein hier gebildeter Restgasstrom eine gleiche oder vergleichbare Zusammensetzung aufweisen wie ein lediglich in einer Aufbereitung, wie zuvor erläutert, gebildeter Restgasstrom. Zumindest kann ein entsprechender Restgasstrom typischerweise in derselben Weise genutzt werden wie zuvor.

Der in einer entsprechenden Umsetzung durchgeführte Syntheseschritt kann insbesondere aus einer Methanolsynthese, einer Dimethylethersynthese, einer Fischer-Tropsch-Synthese und einer Kombination hiervon ausgewählt sein, wobei die Gehalte des Gasgemischs an den jeweiligen Komponenten und weitere Schritte in beliebiger Weise vorgesehen sein können.

Insbesondere bei einer entsprechenden Umsetzung kann das Wasserstoff enthaltende Gasgemisch mit einem vorgegebenen Verhältnis von Wasserstoff zu Kohlenmonoxid und/oder einer vorgegebenen Stöchiometriezahl bereitgestellt und/oder durch Zugabe oder Abtrennung von Kohlendioxid auf ein vorgegebenes Verhältnis von Wasserstoff zu Kohlenmonoxid und/oder eine vorgegebene Stöchiometriezahl eingestellt werden. Eine entsprechende Zugabe kann an beliebiger Stelle oder auch an mehreren Stellen erfolgen. Es versteht sich, das Kohlendioxid auch bereits in dem Frischeinsatz enthalten sein kann, beispielsweise dann, es sich hierbei um Biogas handelt oder der Frischeinsatz Biogasanteile enthält. Es kann daher auch vorgesehen sein, Kohlendioxid abzutrennen, wenn dessen Gehalt höher als gewünscht ist, beispielsweise mittels einer Membrantrennung. Auf diese Weise kann das gewünschte Verhältnis von Kohlendioxid, Kohlenwasserstoffen und Dampf in dem Frischeinsatz eingestellt werden. Insbesondere bei einer Stöchiometriezahl von etwa 2 kann das Produktgas bzw. ein Prozessgasstrom zur Synthese von Methanol und/oder Dimethylether eingesetzt werden. Bei einem Verhältnis von Wasserstoff zu Kohlenmonoxid von 1 oder 2 eignet sich das Produktgas bzw. der Prozessgasstrom insbesondere für eine nachfolgende Oxosynthese.

In einer Ausgestaltung der vorliegenden Erfindung ist vorgesehen, dass zumindest ein Anteil des Restgasstroms in den ersten Reformierreaktor zurückgeführt wird. Auf diese Weise wird insbesondere ein Verdichter in entsprechender Weise eingesetzt. Eine derartige Rückführung ist insbesondere dann vorteilhaft, wenn ein hoher Methanschlupf (d.h. eine geringere Umsetzung in der Reformierung) zu beobachten ist. Dies kann insbesondere dann der Fall sein, wenn eine geringere Reaktoraustrittstemperatur oder eine geringere Dampfmenge im Einsatzgas zur Dampfreformierung vorliegt. Besondere Vorteile ergeben sich, wenn ein dem ersten und/oder zweiten Reformierreaktor eine Desulfurisierung vorgesehen ist, um den entsprechenden Einsatz zu entschwefeln. In einer derartigen Ausgestaltung kann auf ein Wasserstoffgebläse für die Desulfurisierung verzichtet werden. Um den adiabaten Temperaturanstieg in der Desulfurisierung aufgrund vorhandenen Kohlenmonoxids zu reduzieren kann dieser Recycle teilweise stromauf und teilweise stromab der Desulfurisierung rückgespeist werden.

In einer Ausgestaltung der vorliegenden Erfindung ist vorgesehen, dass zumindest ein Anteil des Restgasstroms als zumindest ein Teil des Brennstoffs verwendet wird. Dies entspricht grundsätzlich der Verwendung wie in konventionellen Anlagen.

In einer Ausgestaltung der vorliegenden Erfindung ist vorgesehen, dass stromauf der Überführung zumindest der Komponenten aus dem Gasgemisch in den Restgasstrom eine Wassergasshift durchgeführt wird. Die Wassergasshift kann dabei insbesondere eine Niedertemperatur- oder Ultraniedrigtemperatur-Wassergasshift umfassen und zumindest ein Anteil des Restgasstroms kann in die Wassergasshift zurückgeführt werden.

Die Wassergasshift kann dabei insbesondere unterschiedliche Reaktoren umfassen, beispielsweise eine Hochtemperatur-(HT-)Wassergasshift kombiniert mit einer Niedertemperatur-(LT-)Wassergasshift. Auch eine isotherme oder Ultraniedrigtemperatur-(ULT-)Wassergasshift kann einzeln oder in einer entsprechenden Kombination verwendet werden. Auch eine isotherme oder Mitteltemperatur-(MT-)Wassergasshift kann jedoch grundsätzlich verwendet werden. Der in der Wassergasshift verwendete Katalysator wird entsprechend gewählt.

In einer Ausgestaltung der vorliegenden Erfindung ist vorgesehen, dass der erste und/oder der zweite Reformierreaktor mit einem vorgegebenen Dampf-Kohlenstoff-Verhältnis betrieben wird. Hierbei kann es sich dann, wenn eine Wasserstoffgewinnung im Vordergrund steht bzw. das Gasgemisch lediglich aufbereitet wird, um ein Dampf-Kohlenstoff-Verhältnis von mehr als 2, 2,4 oder 2,8 handeln. Hierdurch wird der Gehalt an Kohlenwasserstoff, insbesondere Methan, im Produktstrom reduziert. Ein Nachteil eines hohen Dampf-Kohlenstoff-Verhältnis ist ein Effizienzverlust. Vorteilhaft ist der geringere Schlupf an Methan. Letzteres kann durch einen Recycle zum Reformer teilweise ausgeglichen werden. Im Falle einer Umsetzung, beispielsweise bei einer Methanolsynthese, kann auch ein geringeres Dampf-Kohlenstoff-Verhältnis von beispielsweise ca. 1,5 (bzw. 1,4 bis 1,6) und bis zu 2 vorteilhaft sein, wobei in diesem Fall insbesondere auch Kohlendioxid zu dem Gasgemisch zugegeben wird (oder bereits im Frischeinsatz enthalten ist, wie im Fall von Biogas oder Erdgas mit hohen Kohlendioxidanteil).

In einer Ausgestaltung der vorliegenden Erfindung ist vorgesehen, dass der erste und/oder der zweite Reformierreaktor mit einer Reaktoraustrittstemperatur von mehr als 850 °C, 900 °C oder 950 °C betrieben wird. Auch dies führt zu einem geringeren Schlupf von Methan in den Produktstrom. Elektrisch beheizte Reformierreaktoren können sogar mit mehr als 1.000 °C betrieben werden. Bei einer seriellen Schaltung kann der erste Reaktor mit einer deutlich niedrigeren Austrittstemperatur betrieben werden, z.B. 650 bis 800°C. Dadurch kann in der Anordnung der elektrische Energiebedarf gegenüber dem Bedarf an Brennstoff optimiert werden. Der Methanschlupf wird nur durch die Austrittstemperatur des zweiten Reaktors bestimmt.

In einer Ausgestaltung der vorliegenden Erfindung ist vorgesehen, dass der erste und der zweite Reformierreaktor in einer gemeinsamen thermisch isolierenden Einhausung bereitgestellt sind.

Eine Anlage zur Herstellung von eines Zielprodukts, die dafür eingerichtet ist, durch Dampfreformierung ein Wasserstoff enthaltendes Gasgemisch zu bilden und das Wasserstoff enthaltende Gasgemisch zu dem Zielprodukt aufzubereiten oder umzusetzen, und die zur Durchführung der Dampfreformierung eine Reaktoranordnung mit einem ersten Reformierreaktor und einem zweiten Reformierreaktor aufweist, ist ebenfalls Gegenstand der vorliegenden Erfindung, wobei der erste Reformierreaktor für eine überwiegend oder ausschließlich elektrische Beheizung eingerichtet ist und der zweite Reformierreaktor für eine überwiegend oder ausschließlich durch Verbrennung eines Brennstoffs erfolgende Beheizung eingerichtet ist wird oder umgekehrt. Hierbei ist vorgesehen, dass die Anlage dafür eingerichtet ist, dem zweiten Reformierreaktor zumindest einen Teil eines Produktstroms des ersten Reformierreaktors und dem ersten Reformierreaktor ein einen Kohlenwasserstoff enthaltenden Frischeinsatz zuzuführen oder dafür eingerichtet ist, dem ersten und dem zweiten Reformierreaktor den Frischeinsatz jeweils in Teilen zuzuführen.

Zu weiteren Merkmalen und den Vorteilen einer entsprechenden Anlage sei auf die obigen Erläuterungen zu dem erfindungsgemäßen Verfahren und seiner Ausgestaltungen ausdrücklich verwiesen, zu dessen Durchführung eine entsprechende Anlage eingerichtet sein kann.

Die erfindungsgemäß vorgesehenen Maßnahmen vergrößern insbesondere die Vorteile einer elektrisch beheizten Dampfreformierung wie reduzierte Kohlendioxidproduktion insgesamt und hohe Wiedergewinnungsraten (und damit geringe Emissionen). Unter dem Begriff "Wiedergewinnungsrate" (engl. Capture Rate) soll dabei insbesondere die Menge an Kohlendioxid in einem abgetrennten Kohlendioxidstrom bezogen auf die Gesamtmenge an Kohlendioxid in allen Austrittsströmen (vor allem im Rauchgas der Brenner und dem Prozessgas) verstanden werden. Ziel ist es, eine Wiedergewinnungsrate von Kohlendioxid von mehr als 90, 95, 97 oder 99% zu erreichen. Durch den Einsatz der vorliegenden Erfindung ist dies möglich, da die Wiedergewinnungsrate durch die elektrische Beheizung verbessert werden kann. Dies ist möglich, da insgesamt weniger Brennerwärme bereitgestellt werden muss. Ein Restgasstrom kann hierdurch ggf. einen zu hohen Brennwert aufweisen, so dass ein Teil hiervon in die Abtrennung oder den Reformierreaktor zurückgeführt wird. Mit der vorliegenden Erfindung wird eine einfache Lösung für die Nutzung des erwähnten, abgetrennten Gasgemischs bereitgestellt, die sich insbesondere auch für die Nachrüstung eignet.

Nachfolgend sollen weitere, alternative oder zusätzliche Verwertungsmöglichkeiten für dem im Rahmen der vorliegenden Erfindung in der oben erläuterten Weise verwendeten Restgasstrom erwähnt werden.

In einem ersten Fall kann dabei der Restgasstrom in seiner Menge verringert werden, indem eine Wasserstofffraktion mit geringerer Qualität (typischerweise mit weniger als 99 Molprozent Wasserstoff) als Produktgas gebildet wird. Diese kann in ein Wasserstoffnetz eingespeist, in einem Brenngassystem verwerten oder für andere Zwecke (die keine hohen Wasserstoffgehalte benötigen) verwendet werden.

Das Wasserstoff-Produktgas bzw. eine entsprechende Produktfraktion kann beispielsweise mittels Temperaturwechseladsorption (TSA) getrocknet werden, um Wasser zu entfernen, ohne dass eine Restgasfraktion der zuvor erläuterten Zusammensetzung entsteht.

Zusätzlich zu den beschriebenen Maßnahmen kann auch in Anlagen ohne befeuerten Reaktor eine PSA installiert werden und ein Restgas kann rekomprimiert und (1) in einen Reformierreaktor (zur Methankonvertierung), (2) eine Wassergasshift (zur Kohlenmonoxidkonvertierung), (3) die PSA selbst und/oder (4) eine weitere PSA (zur Rückgewinnung von Wasserstoff) zurückgeführt werden. Dabei können alle Komponenten mit Ausnahme von Inerten wie Stickstoff und Argon umgewandelt werden. In einem solchen Fall muss entweder (1) die PSA selbst Inerte wie Stickstoff oder Argon (zumindest teilweise) in das Wasserstoffprodukt übergehen lassen, (2) eine Ausschleusung (Purge) installiert werden, oder (3) ein Bypass zum Wasserstoffprodukt um die PSA herum installiert werden, um die Inertstoffe auszuschleusen.

In entsprechenden Fällen kann auch eine elektrisch beheizte Dampfreformierung für die Wasserstoffproduktion mit Abgasexport eingesetzt werden. Das Abgas bzw. eine Restgasfraktion kann zur Einspeisung in ein Erdgasnetz, für ein Brenngassystem oder für andere Zwecke verwendet werden. Um die Restgasfraktion für die jeweilige Anwendung nutzbar zu machen, kann diese in beliebiger Weise mit einer Methanisierung oder anderen Mitteln zur Reinigung oder Implementierung entsprechender chemischer Reaktionsschritte kombiniert werden. Darüber hinaus kann die Zusammensetzung des Abgases durch die Betriebsparameter und die Konstruktion der Anlage selbst beeinflusst werden.

Darüber hinaus kann die Restgasfraktion erneut komprimiert und das Wasserstoffprodukt durch Hinzufügen einer zweiten Druckwechseladsorption nach der Rekompression der Restgasfraktion erhöht werden. Diese Ausführungsform kann mit der Rückführung der Restgasfraktion in die Wassergasshift und/oder Dampfreformierung kombiniert werden.

Eine elektrisch beheizte Dampfreformierung für die Wasserstoffproduktion kann auch mit einem befeuerten Erhitzer für die Abgasnutzung kombiniert werden. Der befeuerte Erhitzer kann nach der Abscheidung von Kohlendioxid aus dem Prozessgas angeordnet werden, um die Kohlendioxidemissionen des befeuerten Erhitzers zu begrenzen. Die Wärme aus dem befeuerten Erhitzer kann in der Dampfreformierungsanlage zur Überhitzung und Dampferzeugung genutzt oder exportiert werden (entweder durch Dampf oder direkt).

Anstelle eines befeuerten Erhitzers kann auch eine Gasturbine zur Nutzung des Abgases bzw. einer Restgasfraktion eingesetzt werden (entweder mit oder ohne Kohlendioxid-Prozessgasabscheidung, wobei dieselben Konzepte wie zuvor erläutert eingesetzt werden können).

Die Kohlendioxidabscheidung nach einem befeuerten Erhitzer kann mit Aminwäsche, aber auch mit Kondensation und kryogener Trennung, Membran- und/oder PSA-Technologie erfolgen. Der befeuerte Erhitzer kann auch mit Sauerstoff anstelle von Luft betrieben werden (Oxyfuel), um die Kohlendioxidabscheidung zu erleichtern.

Außerdem kann das Abgas rekomprimiert und das Wasserstoffprodukt durch Zugabe einer zweiten PSA nach der Abgas- bzw. Restgasrekompression erhöht werden. Diese Ausführungsform kann mit der Rückführung des Abgases in die WGS und/oder den Reformer kombiniert werden.

Die Erfindung wird nachfolgend unter Bezugnahme auf die beigefügten Zeichnungen weiter erläutert, die Ausgestaltungen der vorliegenden Erfindung veranschaulichen.

### Kurze Beschreibung der Zeichnungen

Figuren 1 bis 3 veranschaulichen nicht erfindungsgemäße Verfahren.
Figuren 4 bis 7 veranschaulichen Verfahren gemäß Ausgestaltungen der Erfindung.

In den Figuren sind einander baulich und/oder funktional entsprechende Komponenten mit identischen Bezugszeichen angegeben und werden lediglich der Übersichtlichkeit halber nicht wiederholt erläutert. Wird nachfolgend auf Verfahrensschritte Bezug genommen, gelten die entsprechenden Erläuterungen für entsprechende Anlagenkomponenten in gleicher Weise.

### Ausführliche Beschreibung der Zeichnungen

Die Figuren 1 bis 3 wurden bereits eingangs erläutert.

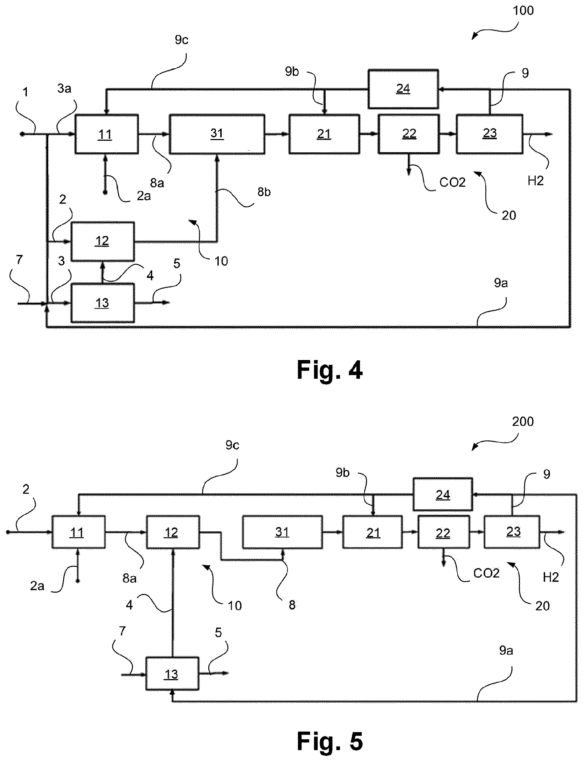

In den Figuren 4 bis 7 sind Verfahren gemäß Ausgestaltungen der Erfindung veranschaulicht und insgesamt mit 100, 200, 300 und 400 bezeichnet. In diesen Ausgestaltungen werden abweichend zu den Figuren 1 bis 3 Reaktoranordnungen 10 mit einem Reformierreaktor 11 und einem Reformierreaktor 12 verwendet, wobei der Reformierreaktor 11 überwiegend oder ausschließlich elektrisch beheizt wird und der Reformierreaktor 12 (der analog dem entsprechend beheizten Reformierreaktor der Figuren 1 bis 3 bezeichnet ist) überwiegend oder ausschließlich durch Verbrennung eines Brennstoffs beheizt wird. Elektrischer Strom, der dem Reformierreaktor 11 zugeführt wird, ist mit 2a bezeichnet.

Wie in Figur 4 anhand des Verfahrens 100 veranschaulicht, können der elektrisch beheizte Reformierreaktor 11 und der befeuerte Reformierreaktor 12 parallel angeordnet sein, wobei Produktströme 8a und 8b in der Wärmeintegration und Konditionierung 31 oder stromauf hiervon zusammengeführt werden können. Dem Reformierreaktor 11 zugeführtes Erdgas ist mit 3a angegeben. Wiederum ist Dampf nicht veranschaulicht. Ein Teil des Restgasstroms 9, hier mit 9a bezeichnet, kann als Brenngas verwendet werden, wohingegen Anteile 9b und 9c optional mittels eines Verdichters 24 aufgedrückt und in die Wassergasshift 21 bzw. den Reformierreaktor 11 zurückgeführt werden können. Beliebige Kombinationen sind möglich. Auch kann der Verdichter 24 weggelassen werden, vor allem bei hohen Dampf-zu-Kohlenstoff-Verhältnissen und niedrigen Shifttemperaturen (aufgrund des in solchen Fällen typischerweise geringen Methan- und Kohlenmonoxidschlupfs). In diesem Fall wird typischerweise nur Strom 9a gebildet.

In Figur 5 ist anhand des Verfahrens 200 eine serielle Anordnung veranschaulicht, in der der elektrisch beheizte Reformierreaktor 11 stromauf des befeuerten Reformierreaktors 12 angeordnet ist und ein Produktstrom 8a des elektrisch beheizten Reformierreaktors 11 in den befeuerten Reformierreaktor 12 geführt wird. Ein gesamter Stoffstrom der Reaktoranordnung 10 ist mit 8 bezeichnet. Der Brenneranordnung wird hier nur der Restgasstrom bzw. dessen Teil 9a zugeführt. Zu weiteren Erläuterungen sei zu den Ausführungen zu Figur 4 verwiesen.

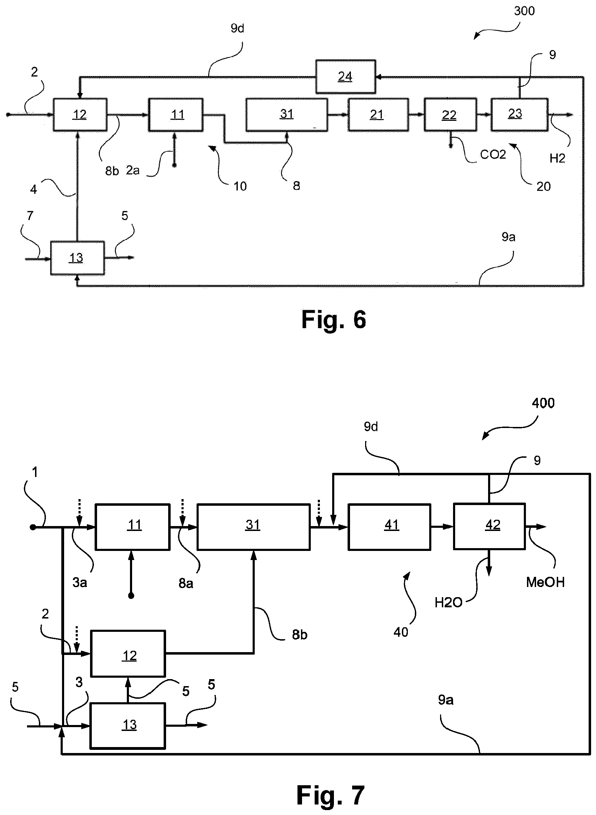

In Figur 6 ist anhand des Verfahrens 300 eine serielle Anordnung veranschaulicht, in der der elektrisch beheizte Reformierreaktor 11 stromab des befeuerten Reformierreaktors 12 angeordnet ist und ein Produktstrom 8b des befeuerten Reformierreaktors 12 in den elektrisch beheizten Reformierreaktor 11 geführt wird. Ein gesamter Stoffstrom der Reaktoranordnung 10 ist wieder mit 8 bezeichnet. Wie hier in einer alternativen Ausgestaltung dargestellt, wird mittels des Verdichters 24 lediglich ein Teilstrom 9d des Restgasstroms in den befeuerten Reformierreaktor rückgeführt.

In Figur 7 ist anhand des Verfahrens 400 veranschaulicht, wie das durch eine Reaktoranordnung gewonnene Gasgemisch nicht lediglich einer Aufbereitung 20 sondern einer weiteren Umsetzung 40 unterworfen werden kann, die im hier veranschaulichten Beispiel eine Methanolsynthese 41 umfasst, der eine Methanolabtrennung 42 nachgeschaltet ist. Wie erwähnt, können aber auch andere Umsetzungen 40 in vergleichbarer Weise vorgesehen sein. Wenngleich das in Figur 7 veranschaulichte Verfahren 400 eine parallele Anordnung der Reformierreaktoren 11 und 12 umfasst, wie sie bereits zu Figur 4 ausführlicher erläutert wurde, sind auch die anderen erläuterten Anordnungen möglich.

In der Methanolabtrennung 42 werden ein dem Restgasstrom der zuvor beschriebenen Ausgestaltungen entsprechender und daher ebenfalls mit 9 bezeichneter Restgasstrom, ein Methanolstrom MeOH und ein Wasserstrom H2O abgetrennt. An den mit gestrichelten Pfeilen bezeichneten Positionen kann jeweils für die Methanolsynthese erforderliches Kohlendioxid eingespeist werden. Auch andere Stoffströme können in einer entsprechenden Methanolabtrennung anfallen, insbesondere auf niedrigem Druck. Letztere eignen sich insbesondere zur Verbrennung, weil sie hierzu nicht aufwendig verdichtet werden müssen.

## Patentansprüche

1. Verfahren (100, 200, 300, 400) zur Herstellung eines Zielprodukts, bei dem durch Dampfreformierung ein Wasserstoff enthaltendes Gasgemisch gebildet wird, das einer Aufbereitung (20) oder Umsetzung (40) zu dem Zielprodukt unterworfen wird, wobei für die Dampfreformierung eine Reaktoranordnung (10) mit einem ersten Reformierreaktor (11, 12) und einem zweiten Reformierreaktor (11, 12) verwendet wird, wobei der erste Reformierreaktor (11) überwiegend oder ausschließlich elektrisch beheizt wird und der zweite Reformierreaktor (12) überwiegend oder ausschließlich durch Verbrennung eines Brennstoffs beheizt wird oder umgekehrt, **dadurch gekennzeichnet, dass** dem zweiten Reformierreaktor (12) zumindest ein Teil eines Produktstroms des ersten Reformierreaktors (11) und dem ersten Reformierreaktor (11) ein einen Kohlenwasserstoff enthaltender Frischeinsatz zugeführt wird, oder dass dem ersten und dem zweiten Reformierreaktor (11, 12) der Frischeinsatz jeweils in Teilen zugeführt wird.

2. Verfahren (100, 200, 300) nach Anspruch 1, wobei der Reaktoranordnung (10) das Gasgemisch entnommen und der Aufbereitung (20) unterworfen wird, und wobei die Aufbereitung (20) eine Überführung (23) von Komponenten des Gasgemischs in einen Restgasstrom (9) umfasst.

3. Verfahren (100, 200, 300) nach Anspruch 2, wobei die Überführung (23) der Komponenten aus dem Gasgemisch in den Restgasstrom eine Druckwechseladsorption umfasst.

4. Verfahren (100, 200, 300) nach Anspruch 3, wobei eine weitere Druckwechseladsorption durchgeführt wird und zumindest ein Teil der Komponenten aus dem Gasgemisch der weiteren Druckwechseladsorption zurückgeführt wird.

5. Verfahren (400) nach Anspruch 1, bei dem das Wasserstoff enthaltende Gasgemisch ferner Kohlenmonoxid enthält und bei dem zumindest ein Teil des Wasserstoff enthaltenden Gasgemischs der Umsetzung (40) unterworfen wird, wobei die Umsetzung (40) einen Syntheseschritt (41) und einen Abtrennschritt (42) umfasst, und wobei der Abtrennschritt (42) eine Überführung von Komponenten aus einem Produktgemisch, das in dem Syntheseschritt (41) erhalten wird, in einen Restgasstrom (9) umfasst.

6. Verfahren (400) nach Anspruch 5, bei dem der Syntheseschritt (41) aus einer Methanolsynthese, einer Dimethylethersynthese, einer Fischer-Tropsch-Synthese und einer Kombination hiervon ausgewählt ist.

7. Verfahren nach Anspruch 5 oder 6, bei dem das Wasserstoff enthaltende Gasgemisch mit einem vorgegebenen Verhältnis von Wasserstoff zu Kohlenmonoxid und/oder einer vorgegebenen Stöchiometriezahl bereitgestellt und/oder durch Zugabe oder Abtrennung von Kohlendioxid auf ein vorgegebenes Verhältnis von Wasserstoff zu Kohlenmonoxid und/oder eine vorgegebene Stöchiometriezahl eingestellt wird.

8. Verfahren (100, 200, 300, 400) nach einem der Ansprüche 2 bis 7, wobei zumindest ein Anteil des Restgasstroms in den ersten oder zweiten Reformierreaktor (11, 12) zurückgeführt wird.

9. Verfahren (100, 200, 300, 400) nach einem der Ansprüche 2 bis 8, wobei zumindest ein Anteil des Restgasstroms als zumindest ein Teil des Brennstoffs verwendet wird.

10. Verfahren (100, 200, 300, 400) nach einem der Ansprüche 2 bis 4, bei dem stromauf der Überführung (23) der Komponenten aus dem Gasgemisch in den Restgasstrom eine Wassergasshift (21) durchgeführt wird.

11. Verfahren (100, 200, 300, 400) nach Anspruch 10bei dem die Wassergasshift (21) eine Niedertemperatur- oder Ultraniedrigtemperatur-Wassergasshift umfasst.

12. Verfahren (100, 200, 300, 400) nach Anspruch 9 oder 11, bei dem zumindest ein Anteil des Restgasstroms in die Wassergasshift (21) zurückgeführt wird, wobei die Wassergasshift (21) mit oder ohne zusätzliche Dampfzugabe betrieben wird.

13. Verfahren (100, 200, 300, 400) nach einem der vorstehenden Ansprüche, bei dem der erste und/oder der zweite Reformierreaktor (11, 12) mit einem vorgegebenen Dampf-Kohlenstoff-Verhältnis betrieben wird.

14. Verfahren (100, 200, 300, 400) nach einem der vorstehenden Ansprüche, bei dem der erste und/oder der zweite Reformierreaktor (11, 12) mit einer Reaktoraustrittstemperatur von mehr als 850 °C betrieben wird, und/oder bei dem der erste und der zweite Reformierreaktor (11, 12) in einer gemeinsamen thermisch isolierenden Einhausung bereitgestellt sind.

15. Anlage zur Herstellung eines Zielprodukts, die dafür eingerichtet ist, durch Dampfreformierung ein Wasserstoff enthaltendes Gasgemisch zu bilden und das Wasserstoff enthaltende Gasgemisch zu dem Zielprodukt aufzubereiten oder umzusetzen, wobei die Anlage zur Durchführung der Dampfreformierung eine Reaktoranordnung (10) mit einem ersten Reformierreaktor (11, 12) und einem zweiten Reformierreaktor (11, 12) aufweist, wobei der erste Reformierreaktor (11) für eine überwiegend oder ausschließlich elektrische Beheizung eingerichtet ist und der zweite Reformierreaktor (12) für eine überwiegend oder ausschließlich durch Verbrennung eines Brennstoffs erfolgende Beheizung eingerichtet ist wird oder umgekehrt, **dadurch gekennzeichnet, dass** die Anlage dafür eingerichtet ist, dem zweiten Reformierreaktor (12) zumindest einen Teil eines Produktstroms des ersten Reformierreaktors (11) und dem ersten Reformierreaktor (11) ein einen Kohlenwasserstoff enthaltenden Frischeinsatz zuzuführen oder dafür eingerichtet ist, dem ersten und dem zweiten Reformierreaktor (11, 12) den Frischeinsatz jeweils in Teilen zuzuführen.
